# EUROPEAN PATENT APPLICATION

(11) **EP 4 266 736 A1**
(43) Date of publication of application: **25.10.2023**
(21) Application number: 21905568.8
(22) Date of filing: 06.12.2021
(51) Int. Cl.: H04W 24/10

(54) **REPORTING METHOD FOR CHANNEL STATE INFORMATION CSI AND RELATED PRODUCT**

(30) Priority: 16.12.2020 CN 202011498795
(71) Applicant: Beijing Unisoc Communications Technology Co., Ltd, Beijing 100083 (CN)
(72) Inventor: WANG, Hualei, Beijing 100083 (CN)
(74) Representative: Mewburn Ellis LLP
(86) International application number: PCT/CN2021/135820
(87) International publication number: WO 2022/127639

(57) **Abstract**

A method for reporting channel state information (CSI) and related products is provided in implementations of the present disclosure. The method includes the following. The LTE obtains network configuration information and a CSI measurement result required in a CSI report associated with the network configuration information; and the LTE reports the CSI report, where the network configuration information includes CSI report configuration information, by means of the technical solutions provided in the present disclosure, network performance can be improved.

## Description

### TECHNICAL FIELD

This disclosure relates to the field of communication processing technologies, and in particular to a method for reporting channel state information (CSI) and related products.

### BACKGROUND

An existing channel state information (CSI) report can only report a CSI measurement result for a single transmission and reception point (TRP), and is unable to report a CSI measurement result for multiple TRPs, thereby affecting network performance.

### SUMMARY

Disclosed herein are implementations of a method for reporting channel state information (CSI) and related products, which can support reporting of a CSI measurement result, thereby improving network performance.

In a first aspect, a method for reporting CSI is provided. The method includes the following. A UE obtains network configuration information and a CSI measurement result required in a CSI report associated with the network configuration information. The LTE reports the CSI report, where the network configuration information includes CSI report configuration information.

In a second aspect, a method for dividing a CSI report by using the method described in the first aspect is provided. The method includes the following. The CSI report is divided into part 1 and part 2, and the CSI report includes a CSI measurement result for a single transmission and reception point (TRP) and a CSI measurement result for multiple TRPs.

In a third aspect, a device for reporting CSI is provided. The device includes an obtaining unit and a communicating unit. The obtaining unit is configured to obtain network configuration information and the CSI measurement result required in the CSI report associated with the network configuration information. The communicating unit is configured to report the CSI report, where the network configuration information includes CSI report configuration information.

In a fourth aspect, a device for dividing a CSI report is provided. The device includes a configuring unit that is configured to divide a CSI report into part 1 and part 2. The CSI report includes a CSI measurement result under a single TRP and a CSI measurement result for multiple TRPs.

In a fifth aspect, an electronic device is provided. The electronic device includes a processor, a memory, a communication interface, and one or more programs stored in the memory and configured to be executed by the processor, where the programs include instructions for executing operations of the method described in the first aspect and the second aspect.

In a sixth aspect, a computer-readable storage medium is provided to store a computer program for electronic data interchange (EDI), where the computer program enables the computer to implement the method described in the first aspect and the second aspect.

In a seventh aspect, a computer program product is provided, where the computer program product includes a non-transitory computer-readable storage medium storing a computer program that is operable with the computer to execute some or all of operations described in the first aspect and the second aspect of the implementations of the present disclosure. The computer program product may be a software installation package.

In an eighth aspect, a chip system is provided. The chip system includes at least one processor, a memory, and an interface circuit. The memory, a transceiver, and the at least one processor are interconnected through lines, and at least one memory is configured to store a computer program. When the computer program is executed by the processor, the computer program implements the method described in the first aspect and the second aspect.

In a technical solution provided in the present disclosure, the LTE obtains the network configuration information and the CSI measurement result required in the CSI report associated with the network configuration information, and the LTE reports the CSI report, so that the UE can report the CSI report with the CSI measurement result for multiple TRPs based on the CSI report configuration information in the network configuration information, thereby reporting the CSI measurement result for multiple TRPs to improve the network performance.

### BRIEF DESCRIPTION OF THE DRAWINGS

Accompanying drawings used for describing implementations of the present disclosure are introduced below.
FIG. 1 is a schematic architectural diagram of a communication system.
FIG. 2 is a schematic flow diagram of a method for reporting channel state information (CSI) provided in implementations of the disclosure.
FIG. 3 is a schematic flow diagram of a method for dividing a CSI report provided in implementations of the disclosure.
FIG. 4 is a schematic flow diagram of a method for reporting CSI provided in a first implementation of the disclosure.
FIG. 5 is a schematic flow diagram of a method for reporting CSI provided in a second implementation of the disclosure.
FIG. 6 is a schematic flow diagram of a method for reporting CSI provided in a third implementation of the disclosure.
FIG. 7 is a schematic structural diagram of a device for reporting CSI provided in implementations of the disclosure.
FIG. 8 is a schematic structural diagram of a device for dividing a CSI report provided in implementations of the disclosure.
FIG. 9 is a schematic structural diagram of an electronic device provided in implementations of the disclosure.

### DETAILED DESCRIPTION

Implementations of the present disclosure will be described hereinafter in connection with accompanying drawings in implementations of the present disclosure.

The term "and/or" in this disclosure is simply an illustration of an association relationship of associated objects, indicating that three relationships can exist, for example, A and/or B, which can indicate the existence of A alone, A and B together, and B alone. In addition, the character "/" in this disclosure generally indicates that associated objects are in an "or" relationship.

The term "multiple" in the implementations of the present disclosure refers to two or more. The expressions such as the first and the second in the implementations of the present disclosure are only for illustrative purposes and to distinguish the description objects, without distinction in order, nor do they represent a special limit on the number of devices in the implementations of the present disclosure, and cannot constitute any restriction on the implementations of the present disclosure. The term "connection" in the implementations of the present disclosure refers to various connection modes, such as direct connection or indirect connection, to implement communication between devices, and the implementations of the present disclosure do not impose any limitation in this regard.

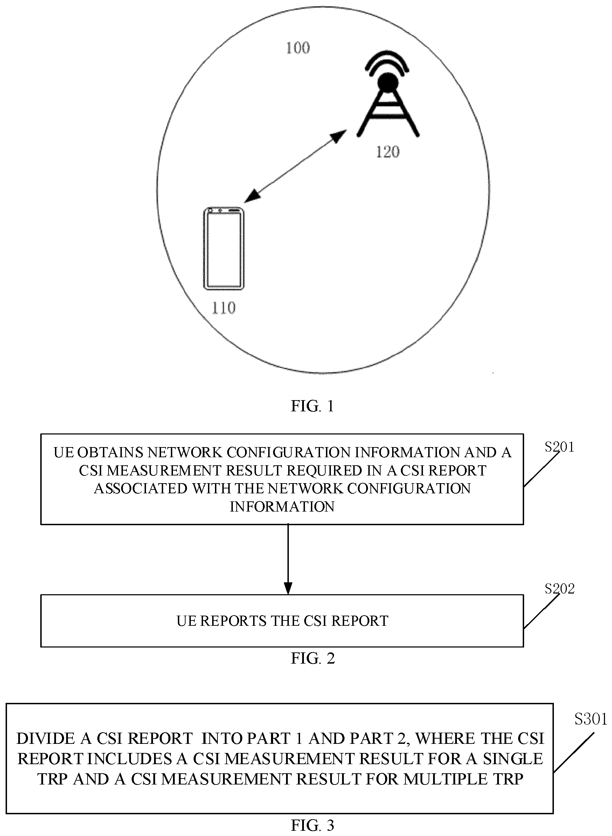

Technical solutions of implementations of the present disclosure are applicable to an exemplary communication system 100 as illustrated in FIG. 1. The exemplary communication system 100 includes a terminal 110 and a network device 120, where terminal 110 is in communication connection with the network device 120.

The terminals in the implementations of the disclosure may be a LTE, an access terminal, a subscriber unit, a subscriber station, a mobile station (MS), a remote station, a remote terminal, a mobile device, a user terminal, a terminal, a wireless communication device, a user agent, or a user device. The terminal device may be a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, a terminal device in a future 5G network, or a terminal device in a future evolved public land mobile network (PLMN), etc. The implementations of the present disclosure do not impose any limitations in this regard.

Referring to FIG. 2, FIG. 2 provides a method for reporting channel state information (CSI). The method can be executed by a terminal device as illustrated in FIG. 1. The method includes the following.

At S201, a UE obtains network configuration information and a CSI measurement result required in a CSI report associated with the network configuration information.

The UE may obtain the network configuration information by receiving the network configuration information sent by a network device, performing a CSI measurement based on the network configuration information, and generating a CSI report associated with the network configuration information based on the measurement result.

At S202, the UE reports the CSI report.

The network configuration information includes CSI report configuration information.

In the technical solution provided in the present disclosure, the UE obtains the network configuration information and the CSI measurement result required in the CSI report associated with the network configuration information, and the UE reports the CSI report, so that the UE can report the CSI report with the CSI measurement result for multiple TRPs based on the CSI report configuration information in the network configuration information, thereby reporting the CSI measurement result for multiple TRPs to improve the network performance.

In an implementation, the CSI report configuration information includes implicit or explicit indication information, where the indication information is used to indicate a type of the CSI measurement result that is required in the associated CSI report.

The explicit indication information may be indicated in 2 bits, and certainly may also be Indicated in other bit numbers. The following 4 types are cited as examples.

Type-4: a type supported by an existing standard, a value of this information is 00.

Type-1: the value of this information is 01.

Type-2: the value of this information is 10.

Type-3: the value of this information is 11.

The implicit indication information may be a report quantity, and the UE implicitly obtains the type of the CSI measurement result based on a specific content of the report quantity. The following 4 types are cited as examples.

Type-4: a type supported by the existing standard.

Type-1: including three pieces of rank indication (RI) report information, such as CSI-RS resource indicator (CRI)-RI-RI-RI-layer indicator (LI)-precoding matrix indicator (PMI)-channel quality indicator (CQI).

Type-2: including two pieces of RI report information, such as cri-RI-RI-LI-PMI-CQI.

Type-3: including four pieces of RI report information, such as cri-RI-RI-RI-RI-LI-PMI-CQI.

In an implementation, the type of CSI measurement result includes at least one of: type-1 CSI measurement result, type-1 CSI measurement result, type-1 CSI measurement result, or type-1 CSI measurement result. The type-1 CSI measurement result includes a CSI measurement result for a single TRP with a single-TRP measurement hypothesis and a CSI measurement result for multiple TRPs with multiple TRPs measurement hypothesis. The type-2 CSI measurement result includes a CSI measurement result for a single TRP or a CSI measurement result for multiple TRPs. The type-3 CSI measurement result includes two CSI measurement results for a single TRP and a CSI measurement result for multiple TRPs. The type-4 CSI measurement result, including only a CSI measurement result for a single TRP.

In an implementation, a priority order is type-2 CSI measurement result & type-4 CSI measurement result & type-1 CSI measurement result & type-3 CSI measurement result.

In an implementation, a priority order is: type-1 CSI measurement result & type-2 CSI measurement result & type-4 CSI measurement result & type-3 CSI measurement result.

In an implementation, a priority order is type-1 CSI measurement result & type-4 CSI measurement result & type-2 CSI measurement result & type-3 CSI measurement result.

In an implementation, a priority order is: type-2 CSI measurement result & type-1 CSI measurement result & type-4 CSI measurement result & type-3 CSI measurement result.

In an implementation, a priority order is type-4 CSI measurement result & type-1 CSI measurement result & type-2 CSI measurement result & type-3 CSI measurement result.

In an implementation, a priority order is type-4 CSI measurement result & type-2 CSI measurement result & type-1 CSI measurement result & type-3 CSI measurement result.

The foregoing priority can be used when discarding the CSI measurement result or in other scenarios during practical applications, such as determining a measurement sequence based on the priority. The CSI measurement result may be discarded when an uplink feedback resource is limited, when a discard command is received from the network device, or the like.

In addition, a CSI measurement result with a low priority may be discarded preferentially, or a CSI measurement result with a high priority may be discarded preferentially.

The above priority order is only for illustration. In practical applications, the priority order of each type can be adjusted according to an actual situation.

Referring to FIG. 3, FIG. 3 provides a method for dividing a CSI report by using the method illustrated in FIG. 2. The method may be executed by a network device or a terminal device illustrated in FIG. 1. As illustrated in FIG. 3, the method includes the following.

At S301, the CSI report is divided into part 1 and part 2, where the CSI report includes a CSI measurement result for a single TRP and a CSI measurement result for multiple TRP.

In a technical solution provided in the present disclosure, the CSI report is divided into part 1 and part 2, where the CSI report includes a CSI measurement result for a single TRP and a CSI measurement result for multiple TRP, thereby reporting the CSI measurement result for multiple TRPs to improve the network performance.

In an implementation, part 1 includes any one or any combination of a CRI for a single TRP, an RI for a single TRP, or a CQI for a first codeword for a single TRP. Part 2 includes at least one or any combination of group 0, group 1, or group 2. Group 0 includes a precoding matrix indicator (PMI) for a single TRP and a CQI for a second codeword for a single TRP, whether the CQI for the second codeword exists depends on the network configuration. Group 1 includes any one or any combination of two CRIs for multiple TRPs, two RIs for multiple TRPs, one CQI for multiple TRPs, or two CQIs for multiple TRPs. Group 2 includes 2 PMIs for multiple TRPs.

In an implementation, part 1 further includes a CRI for a single TRP and any one or any combination of two CRIs for multiple TRPs, two RIs for multiple TRPs, one CQI for multiple TRPs, or two CQIs for multiple TRPs. Part 2 includes at least one or any combination of group 0, group 1, or group 2. Group 0 includes 2 PMIs for multiple TRPs. Group 1 includes a RI for a single TRP, and/or a CQI for a first codeword for a single TRP. Group 2 includes a PMI for a single TRP and/or a CQI for a second codeword for a single TRP.

In an implementation, part 1 includes a CRI for a single TRP and any one or any combination of two CRIs for multiple TRPs, two RIs for multiple TRPs, one CQI for multiple TRPs, or two CQIs for multiple TRPs. Part 2 includes 2 PMIs for multiple TRPs.

In an implementation, part 1 includes any one or any combination of two CRIs for multiple TRPs, two RIs for multiple TRPs, one CQI for multiple TRPs, or two CQIs for multiple TRPs. Part 2 includes at least one or any combination of group 0, group 1, or group 2. Group 0 includes 2 PMIs for multiple TRPs. Group 1 includes a CRI for a single TRP, and/or a RI for a single TRP, and/or a CQI for a first codeword for a single TRP. Group 2 includes a PMI for a single TRP and/or a CQI for a second codeword for a single TRP.

In an implementation, part 1 includes any one or any combination of two CRIs for multiple TRPs, two RIs for multiple TRPs, one CQI for multiple TRPs, or two CQIs for multiple TRPs. Part 2 includes at least one or any combination of group 0, group 1, or group 2. Group 0 includes any one or any combination of a CRI for a single TRP, a RI for a single TRP, or a CQI for a first codeword for a single TRP. Group 1 includes 2 PMIs for multiple TRPs. Group 2 includes a PMI for a single TRP and/or a CQI for a second codeword for a single TRP.

In an implementation, part 1 includes any one or any combination of two CRIs for multiple TRPs, two RIs for multiple TRPs, one CQI for multiple TRPs, or two CQIs for multiple TRPs, and any one or any combination of a CRI for a single TRP, a RI for a single TRP or a CQI for a first codeword for a single TRP. Part 2 includes at least one or any combination of group 0 or group 1. Group 0 includes two CRIs for multiple TRPs. Group 1 includes a PMI for a single TRP and/or a CQI for a first codeword for a single TRP.

In an implementation, a priority order is group 0 > group 1 > group 2.

The priority above can be used when discarding a group of part 2 or in other scenarios during practical applications, such as determining a measurement sequence according to the priority. The group of part 2 may be discarded when the uplink feedback resource is limited, when a discard command is received from the network device, or the like.

In addition, a CSI measurement result with a low priority may be discarded preferentially, or a CSI measurement result with a high priority may be discarded preferentially.

### Implementation 1

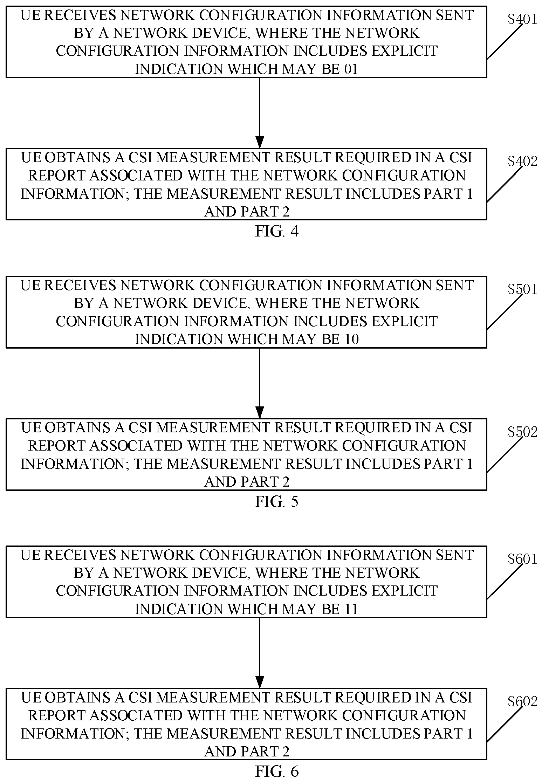

A first implementation of the present disclosure provides a method for reporting CSI. The method can be executed on a network architecture as illustrated in FIG. 1. As illustrated in FIG. 4, the method includes the following.

At S401, a LTE receives network configuration information sent by a network device, where the network configuration information includes explicit indication information which may be 01.

At S402, the LTE obtains a CSI measurement result required in a CSI report associated with the network configuration information, where the measurement result includes part 1 and part 2.

Part 1 may include a CRI for a single TRP and a CQI for the first codeword for a single TRP, and part 2 may include group 0 which includes a PMI for a single TRP and a CQI for the second codeword for a single TRP.

Certainly, the measurement result may also be a CSI measurement result for multiple TRPs. Specifically, part 1 may include two RIs for multiple TRPs and one or two CQIs for multiple TRPs. Part 2 may include group 0 which may include 2 PMIs for multiple TRPs.

The technical solution provided in the implementations of the present disclosure realizes reporting of the type-2 CSI measurement result to improve the network performance.

### Implementation 2

A second implementation of the present disclosure provides a method for reporting CSI. The method can be executed on a network architecture as illustrated in FIG. 1. As illustrated in FIG. 5, the method includes the following.

At S501, a UE receives network configuration information sent by a network device, where the network configuration information includes explicit indication information which may be 10.

At S502, the UE obtains a CSI measurement result required in a CSI report associated with the network configuration information, where the measurement result includes part 1 and part 2.

Part 1 may include two RIs for multiple TRPs and one or two CQI for multiple TRPs. Part 2 may include group 1 which includes two RIs for multiple TRPs and one or two CQI for multiple TRPs, and group 2 which includes 2 PMIs for multiple TRPs.

The technical solution provided in the implementations of the present disclosure realizes reporting of the type-3 CSI measurement result to improve the network performance.

### Implementation 3

A third implementation of the present disclosure provides a method for reporting CSI. The method can be executed on a network architecture as illustrated in FIG. 1. As illustrated in FIG. 6, the method includes the following.

At S601, the UE receives network configuration information sent by a network device, where the network configuration information includes explicit indication information which may be 11.

At S602, the UE obtains a CSI measurement result required in a CSI report associated with the network configuration information, where the measurement result includes part 1 and part 2.

Part 1 may include a CRI for a single TRP and a CQI for a first codeword for a single TRP. Part 2 includes group 0 which includes a PMI for a single TRP and a CQI for a second codeword for a single TRP.

The technical solution provided in the implementations of the present disclosure realizes reporting of the type-4 CSI measurement result to improve the network performance.

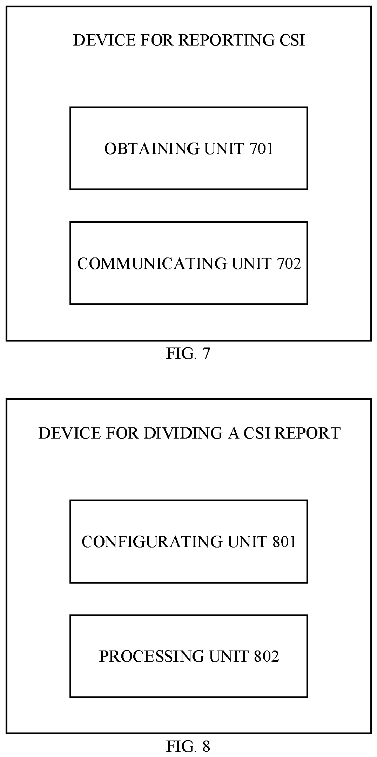

Referring to FIG. 7, FIG. 7 provides a device for reporting CSI. The device includes an obtaining unit 701 and a communicating unit 702.

The obtaining unit 701 is configured to obtain network configuration information and a CSI measurement result which is required in a CSI report associated with the network configuration information.

The communicating unit 702 is configured to report the CSI report.

In an implementation, the network configuration information includes the CSI report configuration information. The CSI report configuration information includes implicit or explicit indication information, where the indication information is configured to indicate the type of the CSI measurement result which is required in the associated CSI report.

In an implementation, the type of the CSI measurement result includes at least one of: type-1 CSI measurement result, type-2 CSI measurement result, type-3 CSI measurement result, or type-4 CSI measurement result. The type-1 CSI measurement result includes a CSI measurement result for a single TRP and a CSI measurement result for multiple TRPs. The type-2 CSI measurement result, including a CSI measurement result for a single TRP or a CSI measurement result for multiple TRPs. The type-3 CSI measurement result, including two CSI measurement results for a single TRP and a CSI measurement result for multiple TRPs. The type-4 CSI measurement result, including only a CSI measurement result for a single TRP.

In an implementation, the communicating unit 702 is configured to discard a CSI measurement result based on a priority when an uplink feedback resource is limited. The priority order is type-2 CSI measurement result & type-4 CSI measurement result & type-1 CSI measurement result & type-3 CSI measurement result.

For the description of the foregoing priority, reference may be made to the description of the foregoing method of the implementation of the present disclosure, and details will not be repeated herein for the sake of simplicity.

Referring to FIG. 8, FIG. 8 provides a device for dividing a CSI report. The device includes a configuring unit 801.

The configuring unit 801 is configured to divide a CSI report into part 1 and part 2, where the CSI report includes a CSI measurement result for a single TRP and a CSI measurement result for multiple TRPs.

In an implementation, part 1 may include a CRI for a single TRP, an RI for a single TRP, and a CQI for the first codeword. Part 2 may include at least one or any combination of group 0, group 1, or group 2. Group 0 includes a PMI for a single TRP and a CRI for a second codeword for a single TRP. Group 1 includes any one or any combination of two CRIs for multiple TRPs, two RIs for multiple TRPs, one CQI for multiple TRPs, or two CQIs for multiple TRPs. Group 2 includes 2 PMIs for multiple TRPs.

In an implementation, part 1 may include two RIs for multiple TRPs, one or two CQI for multiple TRPs, and a CRI for a single TRP. Part 2 may include at least one or any combination of group 0, group 1, or group 2. Group 0 includes two PMIs for multiple TRPs. Group 1 includes a RI for a single TRP and a CQI for the first codeword for a single TRP. Group 2 includes a PMI for a single TRP and a CQI for a second codeword for a single TRP.

In an implementation, part 1 may include two CRIs for multiple TRPs. Group 1 further includes a CRI for a single TRP.

In an implementation, part 1 may include a CRI for a single TRP and any one or any combination of two CRIs for multiple TRPs, two RIs for multiple TRPs, one CQI for multiple TRPs, or two CQIs for multiple TRPs. Part 2 may include two PMIs for multiple TRPs.

In an implementation, the device illustrated in FIG. 8 may also include a processing unit 802. The processing unit 802 is configured to discard a group with a low priority in part 2 when the uplink feedback resource is limited, where the priority order is: group 0 > group 1 > group 2.

For the foregoing priority order, reference may be made to the description of the foregoing method of the implementations of the present disclosure, and details will not be repeated herein for the sake of simplicity.

It can be understood that, in order to implement the above functions, the device includes hardware and/or software modules for performing the respective functions. In combination with the algorithmic operations of various examples described in the implementations disclosed herein, the present disclosure can be implemented in hardware or a combination of hardware and computer software. Whether a function is implemented by way of the hardware or hardware driven by the computer software depends on the particular application and design constraints of the technical solution. Those skilled in the art may use different methods to implement the described functions for each particular application in combination with the implementations, but such implementation should not be considered beyond the scope of the present disclosure.

According to the implementations of the disclosure, functional modules may be divided for the electronic device in accordance with the above method examples. For example, each functional module may be divided according to each function, and two or more functions may be integrated into one processing module. The above-mentioned integrated module can be implemented in the form of hardware. It should be noted that the division of modules in the implementations of the present disclosure is schematic, and is merely a logical function division, and there may be other division manners in actual implementation.

In a case that each functional module is divided according to each function, the obtaining unit, the communicating unit, and the processing unit may be configured to support the user equipment to execute the operations as illustrated in FIG. 2, FIG. 3, FIG. 4, FIG. 5 and FIG. 6 and the detailed solutions of the implementations as illustrated in FIG. 2, FIG. 3, FIG. 4, FIG. 5 and FIG. 6.

It should be noted that all related content of each operation involved in the foregoing method of the implementations of the present disclosure may be referred to a functional description of a corresponding functional module, which is not described herein again.

In the case of the integrated unit, the user equipment may include a processing module and a memory module, where the processing module is configured to control and manage operations of the user equipment, for example, the processing module may be configured to support an electronic device to perform operations executed by the described obtaining unit, communicating unit and processing unit. The memory module is configured to support the electronic device to perform a program code, data, and the like.

The processing module may be a processor or controller, which may implement or perform the various illustrative logical blocks, modules, and circuits described in connection with the present disclosure. The processor may also be a combination that implements a computing function, for example, a combination of one or more microprocessors, or a combination of a digital signal processing (DSP) and a microprocessor. The memory module may be a memory. The communicating module may specifically be a device that interacts with other electronic devices, such as a radio frequency (RF) circuit, a Bluetooth chip, or a Wi-Fi chip.

It should be understood that the interface connection relationship among the modules illustrated in the implementations of the present disclosure is only illustrative, and does not constitute a limitation to the structure of the user equipment. In other implementations of the present disclosure, the user equipment may also adopt different interface connection modes or a combination of multiple interface connection modes in the foregoing implementations.

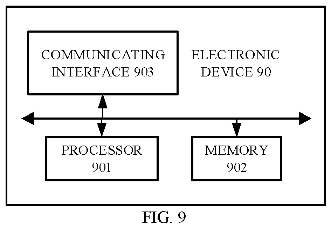

Referring to FIG. 9, FIG. 9 is an electronic device 90 provided in the implementations of the present disclosure. The electronic device 90 includes a processor 901, a memory 902, and a communication interface 903. The processor 901, the memory 902, and the communication interface 903 are connected through a bus.

The memory 902 includes, but is not limited to, a random access memory (RAM), a read-only memory (ROM), an erasable programmable read-only memory (EPROM), or a compact disc read-only memory (CD-ROM), and is configured to store associated computer programs and data. The communications interface 903 is configured to receive and transmit data.

The processor 901 may be one or more central processing units (CPU). When the processor 901 is a CPU, the CPU may be a single-core CPU or a multi-core CPU.

The processor 901 may include one or more processing units, for example, the processing units may include an application processor (AP), a modem processor, a graphics processing unit (GPU), an image signal processor (ISP), a controller, a video codec, a digital signal processor (DSP), a baseband processor, and/or a neural network processing unit (NPU). The different processing units may be independent components or integrated into one or more processors. In some implementations, the user equipment may also include one or more processing units. The controller may generate an operation control signal based on an instruction operation code and a timing signal to complete the control of taking and executing the instruction. In other implementations, the processing unit may also be provided with memory for storing instructions and data. Exemplarily, the memory in the processing unit may be a cache memory to store an instruction or data that is just used or cycled by the processing unit. If the processing unit needs to use the instruction or data again, it may be invoked directly from the memory. In this way, repeated access is avoided, and the waiting time of the processing unit is reduced, thereby improving the efficiency of the user equipment in processing data or executing instructions.

In some implementations, processor 901 may include one or more interfaces, including an inter-integrated circuit (I2C) interface, an inter-integrated circuit sound (I2S) interface, a pulse code modulation (PCM) interface, a universal asynchronous receive/transmitter (UART) interface, a mobile industry processor interface (MIPI), a general-purpose input/output (GPIO) interface, a SIM card interface, and/or a universal serial bus (USB) interface, and the like. The USB interface is an interface complying with a USB standard specification, and may specifically be a Mini USB interface, a Micro USB interface, a USB type-C interface, or the like. The USB interface may be configured to connect a charger to charge user equipment, to transmit data between the user equipment and peripheral equipment, and to connect to an earphone through which audio is played.

If the electronic device 90 is a user equipment, for example, a smartphone, the processor 901 in the electronic device 90 is configured to read the computer program code stored in the memory 902 and perform the following operations: obtaining network configuration information and a CSI measurement result required in a CSI report associated with the network configuration information, and reporting, by the UE, the CSI report, where the network configuration information includes CSI reporting configuration information.

All related content of each scenario involved in the foregoing method of the implementation of the present disclosure may be referred to the functional description of corresponding functional modules, which is not described herein again.

A chip system is provided in the implementations of the present disclosure. The chip system includes at least one processor, a memory, and an interface circuit. The memory, the transceiver, and at least one processor are interconnected through lines, and at least one memory is configured to store computer programs. When the computer program is executed by the processor, the operations illustrated in FIG. 2, FIG. 3, FIG. 4, FIG. 5, and FIG. 6 can be realized.

A computer-readable storage medium is provided in the implementations of the present disclosure to store the computer program. When the computer-readable storage medium runs on the network device, the operations illustrated in FIG. 2, FIG. 3, FIG. 4, FIG. 5, and FIG. 6 can be realized.

A computer program product is provided in the implementation of the present disclosure. When the computer program product runs on the terminal, the operations illustrated in FIG. 2 can be realized.

An electronic device is provided in the implementation of the present disclosure. The electronic device includes a processor, a memory, a communication interface, and one or more programs stored in the memory and configured to be executed by the processor, where the programs include instructions for executing operations of the method illustrated in FIG. 2, FIG. 3, FIG. 4, FIG. 5 and FIG. 6.

The foregoing solution of the implementations of the disclosure is mainly described from the viewpoint of the operations of the methods. It can be understood that, in order to implement the above functions, the electronic device includes hardware structures and/or software modules for performing the respective functions. Those skilled in the art should readily recognize that, in combination with the units and algorithmic operations of various examples described in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation should not be considered beyond the scope of the present disclosure.

According to the implementations of the disclosure, functional units may be divided for the electronic device in accordance with the foregoing method examples. For example, each functional unit may be divided according to each function, and two or more functions may be integrated into one processing unit. The foregoing integrated unit can be implemented in the form of hardware or software functional units. It should be noted that the division of units in the implementations of the present disclosure is schematic, and is merely a logical function division, and there may be other division manners in actual implementation.

For the sake of simplicity, the foregoing method implementations are described as a series of action combinations. However, it will be appreciated by those skilled in the art that implementations are not limited by the sequence of actions described. According to implementations, some steps or operations may be performed in other orders or simultaneously. Besides, it will be appreciated by those skilled in the art that the implementations described in the specification are exemplary implementations, and the actions and modules involved are not necessarily essential to the disclosure.

In the foregoing implementations, the description of each implementation has its emphasis. For the parts not described in detail in one implementation, reference may be made to related descriptions in other implementations.

It will be appreciated that the devices disclosed in implementations herein may also be implemented in various other manners. For example, the above device's implementations are merely illustrative, for example, the division of units is only a division of logical functions, and there may exist other manners of division in practice; multiple units or assemblies may be combined or integrated into another system, or some features may be ignored or skipped. In other respects, the coupling or direct coupling or communication connection as illustrated or discussed may be an indirect coupling or communication connection through some interface, device or unit, and may be electrical or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one. The integrated unit may take the form of a hardware or a software functional unit.

If the integrated units are implemented as software functional units and sold or used as standalone products, they may be stored in a computer-readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, for example, a personal computer, a server, a network device, etc., or a processor to execute some or all operations of the methods described in various implementations. The above storage medium may include various kinds of media that can store program codes, such as a USB flash disk, a mobile hard drive, a ROM, a RAM, a magnetic disk, or an optical disk.

It will be understood by those of ordinary skill in the art that all or a part of the various methods of the implementations described above may be accomplished by means of a program to instruct associated hardware, and the program may be stored in a computer-readable memory, which may include a flash disk, an ROM, an RAM, a magnetic disk, or an optical disk.

## Claims

1. A method for reporting channel state information (CSI), comprising:
obtaining, by a UE, network configuration information and a CSI measurement result, the CSI measurement result being required in a CSI report associated with the network configuration information; and
reporting, by the LTE, the CSI report;
wherein the network configuration information comprises CSI report configuration information.

2. The method of claim 1, wherein the CSI report configuration information comprises implicit or explicit indication information, and the indication information is used to indicate a type of the CSI measurement result that is required in the associated CSI report.

3. The method of claim 2, wherein the type of the CSI measurement result comprises at least one of:
type-1 CSI measurement result, comprising a CSI measurement result for a single transmission and reception point (TRP) and a CSI measurement result for a plurality of TRPs;
type-2 CSI measurement result, comprising a CSI measurement result for a single TRP or a CSI measurement result for a plurality of TRPs;
type-3 CSI measurement result, comprising two CSI measurement results for a single TRP and a CSI measurement result for a plurality of TRPs; or
type-4 CSI measurement result, comprising only a CSI measurement result for a single TRP.

4. The method of claim 3, further comprising:
a priority order is type-2 CSI measurement result & type-4 CSI measurement result & type-1 CSI measurement result & type-3 CSI measurement result.

5. A method for dividing a channel state information (CSI) report by using the method of any one of claims 1 to 4, comprising:
dividing a CSI report into part 1 and part 2, the CSI report comprising a CSI measurement result for a single transmission and reception point (TRP) and a CSI measurement result for a plurality of TRPs.

6. The method of claim 5, wherein part 1 comprises any one or any combination of a CSI-RS resource indicator (CRI) for a single TRP, a rank indication (RI) for a single TRP, or a channel quality indicator (CQI) for a first codeword for a single TRP.

7. The method of claim 5, wherein part 2 comprises at least one or any combination of group 0, group 1, or group 2, wherein,
group 0 comprises a precoding matrix indicator (PMI) for a single TRP and/or a CQI for a second codeword for a single TRP;
group 1 comprises any one or any combination of two CRIs for a plurality of TRPs, two RIs for a plurality of TRPs, one CQI for a plurality of TRPs, or two CQIs for a plurality of TRPs; and
group 2 comprises 2 PMIs for a plurality of TRPs.

8. The method of claim 5, wherein part 1 comprises:
any one or any combination of two CRIs for a plurality of TRPs, two RIs for a plurality of TRPs, one CQI for a plurality of TRPs, or two CQIs for a plurality of TRPs; and
a CRI for a single TRP.

9. The method of claim 5, wherein part 2 comprises at least one or any combination of group 0, group 1, or group 2, wherein,
group 0 comprises 2 PMIs for a plurality of TRPs;
group 1 comprises any one or any combination of a CRI for a single TRP, a RI for a single TRP, or a CQI for a first codeword for a single TRP; and
group 2 comprises a PMI for a single TRP and/or a CQI for a second codeword for a single TRP.

10. The method of claim 5, wherein part 1 comprises any one or any combination of two CRIs for a plurality of TRPs, two RIs for a plurality of TRPs, one CQI for a plurality of TRPs, or two CQIs for a plurality of TRPs.

11. The method of claim 5, wherein part 2 comprises 2 PMIs for a plurality of TRPs.

12. The method of any one of claims 7 to 11, wherein a priority order is: group 0 > group 1 > group 2.

13. A device for reporting a channel state information (CSI), comprising:
an obtaining unit configured to obtain network configuration information and a CSI measurement result, the CSI measurement result being required in a CSI report associated with the network configuration information; and
a communicating unit configured to report the CSI report;
wherein the network configuration information comprises CSI report configuration information.

14. The device of claim 13, wherein the CSI report configuration information comprises implicit or explicit indication information, and the indication information is configured to indicate a type of the CSI measurement result that is required in the associated CSI report.

15. The device of claim 14, wherein the type of the CSI measurement result comprises at least one of:
type-1 CSI measurement result, comprising a CSI measurement result for a single transmission and reception point (TRP) and a CSI measurement result for a plurality of TRPs;
type-2 CSI measurement result, comprising a CSI measurement result for a single TRP or a CSI measurement result for a plurality of TRPs;
type-3 CSI measurement result, comprising two CSI measurement results for a single TRP and a CSI measurement result for a plurality of TRPs; or
type-4 CSI measurement result, comprising only a CSI measurement result for a single TRP.

16. A device for dividing a channel state information (CSI) report, comprising:
a configuring unit configured to divide a CSI report into part 1 and part 2, the CSI report comprising a CSI measurement result for a single transmission and reception point (TRP) and a CSI measurement result for a plurality of TRPs.

17. The device of claim 16, wherein part 1 comprises any one or any combination of a CSI-RS resource indicator (CRI) for a single TRP, a rank indication (RI) for a single TRP, or a channel quality indicator (CQI) for a first codeword for a single TRP.

18. An electronic device, comprising a processor, a memory, a communication interface, and one or more programs stored in the memory and configured to be executed by the processor, the programs comprising instructions for executing operations of the method of any one of claims 1 to 4 or any one of claims 5 to 12.

19. A chip system, comprising at least one processor, a memory, and an interface circuit, the memory, a transceiver, and at least one processor interconnected through lines, and at least one memory configured to store computer programs; when the computer program is executed by the processor, the computer program implementing the method of any one of claims 1 to 4 or the method of any one of claims 5 to 12.

20. A computer-readable storage medium, the computer-readable storage medium storing the computer program, when the computer program runs on the user equipment, the computer program implementing the method of any one of claims 1 to 4 or the method of any one of claims 5 to 12.
